Europäisches Patentamt

European Patent Office

Office européen des brevets

(11) Publication number: **0 006 593**
**B1**

(19)

(12) **EUROPEAN PATENT SPECIFICATION**

(45) Date of publication of patent specification: **20.04.83**

(51) Int. Cl.³: **C 01 B 33/24, C 01 F 7/76**

(21) Application number: **79102075.3**

(22) Date of filing: **22.06.79**

(54) **Process for producing tobermorite and ettringite.**

(30) Priority: **22.06.78 JP 76143/78**
**22.06.78 JP 76145/78**

(43) Date of publication of application:
**09.01.80 Bulletin 80/1**

(45) Publication of the grant of the patent:
**20.04.83 Bulletin 83/16**

(84) Designated Contracting States:
**BE DE FR GB IT SE.**

(56) References cited:
**DE - A - 2 551 308**
**FR - A - 2 250 724**
**US - A - 3 131 024**
**US - A - 3 806 585**

(73) Proprietor: **KUBOTA LTD.**
**2-47, Shikitsuhigashi-1-chome**
**Naniwa-ku Osaka (JP)**

(72) Inventor: **Tamura, Hideo**
**26-7, Hoshinoso Takarazuka city**
**Hyogo (JP)**
Inventor: **Ibuki, Seiro**
**773-30, Nomura-cho Kusatsu city**
**Shiga (JP)**

(74) Representative: **Patentanwälte TER MEER -**
**MÜLLER - STEINMEISTER**
**Triftstrasse 4**
**D-8000 München 22 (DE)**

Courier Press, Leamington Spa, England.

## Process for producing tobermorite and ettringite

The present invention relates to a process for producing tobermorite and ettringite.

Prior art

Tobermorite, $5CaO \cdot 6SiO_2 \cdot 5H_2O$, is known as one of the calcium silicate hydrates. When a shaped body of cement and siliceous sand is subjected to hydrothermal reaction (140 to 200°C, 3.9 to 15.7 bar, 8 to 12 hours) in an autoclave, tobermorite is usually formed. The resulting platelike crystals are thought to give enhanced strength to the hardened cement body. Tobermorite can also be prepared from a slurry of milk of quick lime and finely divided siliceous sand containing silicic acid of high purity by autoclaving (170°C, 7.8 bar, 4 to 8 hours). The product affords lightweight shaped bodies resistant to high temperatures of up to 850°C and having a bulk density of up to 0.2. With such outstanding heat insulating properties and low specific gravity, tobermorite is useful as an ideal component of lightweight nonflammable heat resistant building materials and heat insulating materials.

Tobermorite has heretofore been commercially produced from lime and diatomaceous earth or a special siliceous material by hydrothermal treatment with an autoclave. However, since diatomaceous earth and like siliceous material usually contain small amount of $Al_2O_3$, $Al_2O_3$ combines with $SiO_2$ to give hydrogarnet, $Ca_3Al_2(Si_{n-x} \cdot xH_4)O_{12}$ wherein n=3 and x=1 to 3, when the starting materials are autoclaved for hydrothermal reaction, with the result that the tobermorite obtained has reduced strength due to the presence of hydrogarnet. The synthesis of tobermorite therefore requires the use of a siliceous material almost free from alumina but containing $SiO_2$ with a high purity of 90 to 95%. Such high-purity siliceous materials are available only with difficulty because of limited sources and are costly.

Ettringite is a double salt of calcium aluminate and sulfate ($3CaO \cdot Al_2O_3 \cdot 3CaSO_4 \cdot 32H_2O$) and is characterized by a large amount of crystal water contained in its molecular structure and accounting for about 47% of the molecular weight thereof. It starts to release the water of crystallisation at a temperature of about 60°C or higher and becomes completely dehydrated at 150°C. Accordingly, wall materials incorporating ettringite are useful as building materials which per se act to extinguish fire especially effectively at the initial stage of fire accidents. Ettringite, which is in the form of needlelike crystals, can also be made into nonflammable paper as admixed with pulp. Despite such usefulness, it has rarely been attempted to synthesize this mineral. Only a few proposals heretofore made include a process for preparing ettringite by admixing an alkali solution with a mixture of granulated blast furnace slag and gypsum and reacting the resulting mixture at room temperature or elevated temperature (Published Unexamined Japanese Patent Application JA—A—53—32900).

US—A—3 806 586 discloses a process for producing a xonotlite type hydrous calcium silicate, comprising mixing calcium oxide, silicic acid and an alkali compound and subjecting the resulting mixture to a hydrothermal reaction at 200 to 250°C under the pressure of saturated steam. From the description can be taken that the reaction passes via tobermorite, which is finally reacted to xonotlite. This document does not make any reference to using as an additional component alumina.

DE—A—2 551 308 discloses a method for the manufacture of ettringite from lime material and alumina component and a calcium sulfate component. This reference does not make reference to preparing ettringite from a filtrate obtained during the preparation of tobermorite.

FR—A—2 250 724 describes a method for producing a mixture of ettringite and tobermorite, but does not disclose the preparation of ettringite from the filtrate obtained by separating tobermorite from the reaction mixture and using the components and the conditions defined herein.

An object of the present invention is to provide a process for producing tobermorite by admixing a siliceous material, a lime material and an alkali solution and subjecting the slurry obtained to a hydrothermal reaction under the pressure of saturated steam.

Another object of the invention is to provide a process for producing ettringite by adding an alkali solution to siliceous material and gypsum material and reacting the mixture at room temperature or hydrothermally.

Still another object of the invention is to provide a closed synthetic cycle in which an alkali solution resulting from the production of ettringite is reused for the production of tobermorite, the alkali solution thus being circulated through the chemical reaction cycle without being discharged from the system.

Figure 1 is a block diagram showing the process of this invention, and

Figure 2 is a graph showing tobermorite formation ratio and alumina extraction ratio relative to the water vapor pressure of a hydrothermal reaction system.

According to the process of this invention tobermorite is synthesized by using siliceous material containing 10 to 40 percent by weight of alumina and lime material in such proportion that the $SiO_2/CaO$ mole ratio is 0.7 to 1.2 and subjecting the mixture to the hydrothermal reaction with water vapor at a pressure of 3.9 to 39.2 bar.

A process for producing ettringite comprises the sequential steps of:

effecting the process as disclosed above,

filtering off the tobermorite from the reaction mixture,

admixing a lime material and a gypsum material with the resulting alkali reaction product in the filtrate and

reacting the mixture in a temperature of from room temperature to a temperature of up to 90°C to form ettringite.

According to a preferred emodiment of this process said sequential steps are repeated with the addition of the alumina-containing siliceous material and the lime material being to a filtrate separated from the ettringite and resulting from said fourth-mentioned step.

A further embodiment of this process comprises the steps of:

effecting the process as defined above,

admixing a lime material and a gypsum material with the resulting alkali reaction product in the reaction mixture containing the tobermorite and

reacting the mixture at a temperature of from room temperature to a temperature of up to 90°C to form ettringite.

According to a preferred embodiment of this latter process said sequential steps are repeated with the addition of the alumina-containing siliceous material and the lime material being to a filtrate separated from the mixture of tobermorite and ettringite resulting from said finally-mentioned step.

Examples of useful siliceous materials are kaolin, terra alba, mica, volcanic ash, granulated blast furnace slag and fly ash, or a mixture of at least two of said materials.

Preferably the alkali solution used has a concentration of 10 to 200 g sodium hydroxide in one liter of water.

Examples of useful lime materials are quick lime, slaked lime, carbid residium or a mixture of least two of said materials.

As calcined gypsum, hemihydrate gypsum, gypsum dihydrate and gypsum produced by the desulfurisation of exhaust gases or a mixture of at least two of said materials are used as gypsum material.

Experiment 1

A 21.85 g quantity of kaolin as a siliceous material and 10.53 g of $Ca(OH)_2$ as a lime material, each in the form of finely divided particles, were reacted in an autoclave under the following conditions, with $Ca(OH)_2$ calculated as CaO. $CaO/SiO_2$ mole ratio—0.83, weight (500 g) of water/weight of $CaO+SiO_2+Al_2O_3=19.4$, hydrothermal reaction time=3 hours, NaOH concentration=150 g/liter, stirring speed=300 $min^{-1}$, and saturated water vapor pressure varying over the range of 0.98 to 13.7 bar.

The reaction mixture was filtered, and the Al component of the filtrate was determined to calculate the Al extraction ratio, which is given by:

$$\frac{\text{Weight of Al in filtrate, calcd as } Al_2O_3 \text{ (g)}}{\text{Weight of } Al_2O_3 \text{ in kaolin (g)}} \times 100(\%)$$

| Specimen No. | Pressure (bar) | Vapor temp. (°C) | Al extraction ratio (%) |
|---|---|---|---|
| 1 | 13.7 | 200 | 54.0 |
| 2 | 9.8 | 190 | 54.5 |
| 3 | 7.8 | 182 | 54.7 |
| 4 | 5.9 | 170 | 56.0 |
| 5 | 3.9 | 158 | 54.9 |
| 6 | 2.9 | 148 | 47.1 |
| 7 | 1.96 | 135 | 41.4 |
| 8 | 0.98 | 125 | 31.0 |

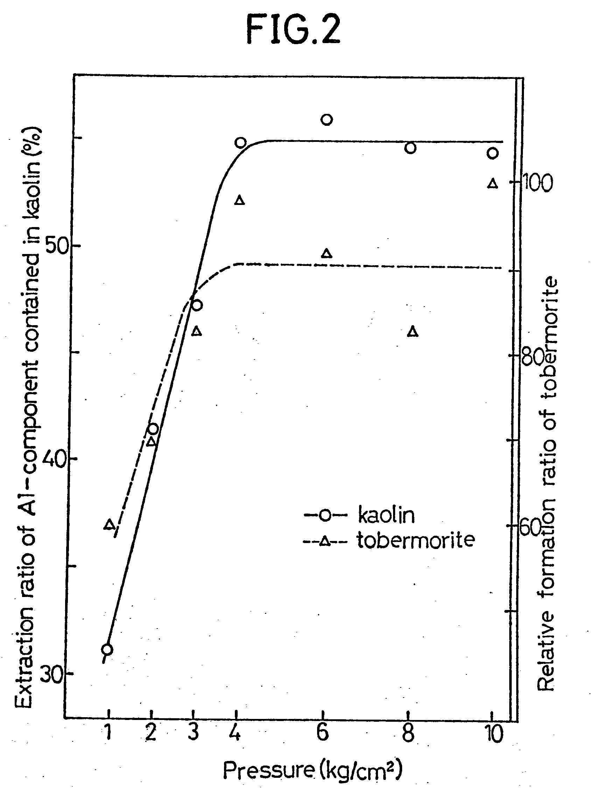

Fig. 2 shows the results of the experiment. In this graph, the pressure is plotted as abscissa vs. the tobermorite formation ratio and Al extraction ratio as ordinate. An approximately constant tobermorite formation ratio is achieved at about 2.9 bar or higher, while the Al extraction ratio levels off at 3.9 bar and remains substantially constant at higher pressures. Pressures exceeding 39.2 bar pose problems in the strength of the equipment and are uneconomical. Thus the vapor pressure is in the range of 3.9 to 39.2 bar.

Kaolin has the following composition as determined by quantitative analysis.

|  | % by weight |
|---|---|
| $SiO_2$ | 46.4 |
| $Al_2O_3$ | 37.4 |
| $Fe_2O_3$ | 0.5 |
| Miscellaneous | 2.9 |
| Ig. loss | 12.8 |

An X-ray analysis of the solid product revealed a diffraction diagram having a peak at $2\theta=29.0°$, whereby the product was identified as tobermorite, and the amount of tobermorite was also calculated.

With the process of this invention, a major portion of the alumina contained in an excessive amount in the siliceous material migrates into the liquid phase, giving an alkali reaction product such as sodium aluminate without forming hydrogarnet which is produced by the conventional hydrothermal reaction. The present process therefore affords tobermorite of good quality. Differential thermal analysis shows that whereas usual tobermorite has a peak at 850°C and is subject to degradation, the tobermorite prepared from kaolin has a peak at 900°C and higher thermal decomposition temperature, presumably because Si has been substituted for Al remaining in the solid phase.

The reaction mixture resulting from the above process filtered to obtain a filtrate as separated from tobermorite. (The filtrate is a sodium aluminate solution when sodium hydroxide is used for the alkali solution in the process). A lime material and gypsum material are added to the filtrate each in amount of about 3 moles per 2 moles of alkali product, such as sodium aluminate, in the filtrate. The mixture is then reacted at room temperature to 90°C for at least 5 hours, whereby ettringite is formed.

Examples of useful gypsum materials are calcined gypsum, hemihydrate gypsum, gypsum dihydrate, gypsum produced by the desulfurization of exhaust gases, etc.

Experiment 2

A 43.70 g quantity of kaolin and 21.06 g of $Ca(OH)_2$ each in form of finely divided particles were admixed with 20 g/liter aqueous solution of sodium hydroxide to prepare a suspension, which was subjected to hydrothermal reaction in an autoclave at a temperature of 194°C for 5 hours with use of saturated water vapor at pressure of 13.7 bar while the suspension was being stirred at 300 min⁻¹. The solid reaction product was filtered off and analyzed by X-ray diffractiometry, which revealed that the product consisted essentially of tobermorite.

To the filtrate separated from the solid product were added 7.24 of calcium hydroxide and 16.70 g of gypsum dihydrate. The mixture was stirred in a thermostat at 25°C for 30 minutes and then allowed to stand. Such mixtures were left standing for 3 hours, 5 hours and 20 hours after which the solid reaction product was collected and subjected to X-ray diffractiometry to identify the components of the product and the amounts thereof with the following results.

| Specimen No. | Standing time | Solid phase component |
|---|---|---|
| 9 | 3 hours | Ettringite, a large amount of gypsum and a very small amount of calcium carbonate. |
| 10 | 5 hours | A large amount of ettringite, and very small amounts of gypsum and calcium carbonate. |
| 11 | 20 hours | A large amount of ettringite, no gypsum and a very small amount of calcium carbonate. |

The reaction temperature for the formation of ettringite is preferably up to 90°C. Temperatures above 90°C will not permit smooth take-up of water of hydration, inhibiting the formation of ettringite. The ettringite forming reaction is conducted for 2 to 10 hours, preferably for at least 5 hours. The filtrate separated from ettringite consists predominantly of an alkali such as sodium hydroxide and is reusable as such for the production of tobermorite in the first stage.

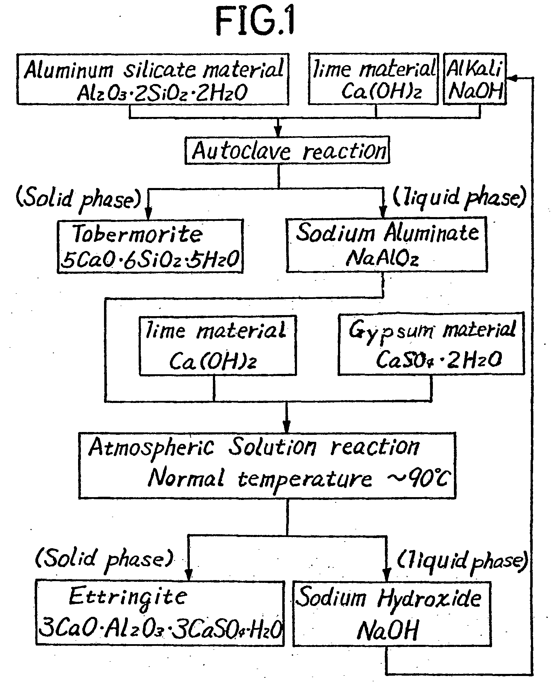

As will be apparent from the block diagram of Fig. 1, the alkali solution is repeatedly reused in this invention by being circulated through the system without being discharged therefrom, so that the chemical reaction can be carried out only with the replenishment of the system with a quantity of alkali solution to compensate for the spontaneous consumption. Thus the process affords tobermorite and ettringite at low cost without causing any environmental pollution with the alkali.

The second step of forming ettringite may be initiated with the use of the reaction mixture resulting from the tobermorite forming step and having both the solid phase and liquid phase without separating off the solid phase. The second step will then give a solid mixture of tobermorite and ettringite. This mixture has higher strength than tobermorite.

**Claims**

1. A process for producing tobermorite by admixing a siliceous material, a lime material and an alkali solution and subjecting the slurry obtained to a hydrothermal reaction under the pressure of

4

saturated steam, characterized by using siliceous material containing 10 to 40 percent by weight of alumina and lime material in such proportions that the $SiO_2$/CaO mole ratio is 0.7 to 1.2 and subjecting the mixture to the hydrothermal reaction with water vapor at a pressure of 3.9 to 39.2 bar.

2. A process for producing ettringite by adding an alkali solution to siliceous material and gypsum material and reacting the mixture at room temperature or hydrothermally, characterized by the sequential steps of:

effecting the process as claimed in claim 1,

filtering off the tobermorite from the reaction mixture,

admixing a lime material and a gypsum material with the resulting alkali reaction product in the filtrate and

reacting the mixture at a temperature of from room temperature to a temperature of up to 90°C to form ettringite.

3. The process according to claim 2, characterized by thereafter repeating said sequential steps with the addition of the alumina-containing siliceous material and the lime material being to a filtrate separated from the ettringite and resulting from said fourth-mentioned step.

4. A process for producing ettringite by adding an alkali solution to siliceous material and gypsum material and reacting the mixture at room temperature or hydrothermally, characterized by the steps of:

effecting the process as claimed in claim 1,

admixing a lime material and a gypsum material with the resulting alkali reaction product in the reaction mixture containing the tobermorite and

reacting the mixture at a room temperature to a temperature of up to 90°C to form ettringite.

5. The process as claimed in claims 1 to 4, characterized in that kaolin, terra alba, mica, volcanic ash, granulated blast furnace slag and fly ash, or a mixture of at least two of said materials is used as siliceous material.

6. The process as defined in one of the preceding claims, characterized in that the alkali solution used has a concentration of 10 to 200 g sodium hydroxide in 1 liter of water.

7. The process as defined in claims 2 to 4, characterized in that quick lime, slaked lime, carbide residuum or a mixture of at least two of said materials is used as lime material.

8. The process as defined in claims 2 to 4, characterized in that calcined gypsum, hemihydrate gypsum, gypsum dihydrate and gypsum produced by the desulfurization of exhaust gases, or a mixture of at least two of said materials are used as gypsum material.

## Patentansprüche

1. Verfahren zur Herstellung von Tobermorit, gemäß dem ein siliciumdioxidhaltiges Material, ein Kalkmaterial und eine Alkalilösung vermischt werden und die erhaltene Aufschlämmung einer hydrothermalen Reaktion unter dem Druck von gesättigtem Dampf ausgesetzt wird, dadurch gekennzeichnet, daß man ein siliciumdioxidhaltiges Material, das 10 bis 40 Gew.-% Aluminiumdioxid enthält und das Kalkmaterial in solchen Mengenverhältnissen verwendet, daß das $SiO_2$/CaO-Molverhältnis 0,7 bis 1,2 beträgt, und die Mischung der hydrothermalen Reaktion mit Wasserdampf bei einem Druck von 3,9 bis 39,2 Bar unterwirft.

2. Verfahren zur Herstellung von Ettringit durch Zugabe einer Alkalilösung zu einem siliciumdioxidhaltigen Material und einem Gipsmaterial und Umsetzen der Mischung bei Raumtemperatur oder unter hydrothermalen Bedingungen, gekennzeichnet durch die folgenden aufeinanderfolgenden Schritte:

— Durchführung des Verfahrens gemäß Anspruch 1,

— Abfiltrieren des Tobermorits von der Reaktionsmischung,

— Vermischen eines Kalkmaterials und eines Gipsmaterials mit dem erhaltenen alkalischen Reaktionsprodukt in dem Filtrat und

— Umsetzen der Mischung bei einer Temperatur von Raumtemperatur bis zu einer Temperatur von bis zu 90°C unter Bildung von Ettringit.

3. Verfahren nach Anspruch 2, dadurch gekennzeichnet, daß man anschleißend die aufeinanderfolgenden Schritte wiederholt unter Zugabe des Aluminiumoxid enthaltenden siliciumdioxidhaltigen Materials und des vorliegenden Kalkmaterials zu einem Filtrat, das von dem Ettringit abgetrennt worden ist und in der vierten Stufe gebildet worden ist.

4. Verfahren zur Herstellung von Ettringit durch Zugabe einer Alkalilösung zu einem siliciumdioxidhaltigen Material und einem Gipsmaterial und Umsetzen der Mischung bei Raumptemperatur oder unter hydrothermalen Bedingungen, gekennzeichnet durch die folgenden Schritte:

— Durchführung des Verfahrens nach Anspruch 1,

— Vermischen eines Kalkmaterials und eines Gipsmaterials mit dem erhaltenen alkalischen Reaktionsprodukt in der Tobermorit enthaltenden Reaktionsmischung und

— Umsetzen der Mischung bei einer Temperatur von Raumtemperatur bis zu einer Temperatur von bis zu 90°C unter Bildung von Ettringit.

5. Verfahren nach den Einsprüchen 1 bis 4, dadurch gekennzeichnet, daß man als siliciumdioxidhaltiges Material Kaolin, Terra Alba, Glimmer, vulkanische Asche, granulierte Hochofenschlacke und Flugasche oder eine Mischung aus mindestens 2 dieser Materialien verwendet.

6. Verfahren nach einem der vorhergehenden Ansprüche, dadurch gekennzeichnet, daß die verwendete Alkalilösung eine Konzentration von 10 bis 200 g Natriumhydroxid pro Liter Wasser aufweist.

7. Verfahren nach den Ansprüchen 2 bis 4, dadurch gekennzeichnet, daß man als Kalkmaterial gebrannten Kalk, gelöschten Kalk, Karbidkalkrückstände oder Mischungen aus mindestens zwei dieser Materialien verwendet.

8. Verfahren nach den Ansprüche 2 bis 4, dadurch gekennzeichnet, daß man als Gipsmaterial calcinierten Gips, Gips-Hemihydrat, Gips-Dihydrat und durch Entschwefelung von Abgasen gebildeten Gips oder eine Mischung aus mindestens zwei dieser Materialien verwendet.

## Revendications

1. Procédé pour la fabrication de tobermorite en mélangeant une matière siliceuse, une matière à chaux et une solution alcaline et en soumettant la suspension obtenue à une réaction hydrothermique sous la pression de vapeur saturée, caractérisé par l'utilisation d'une matière siliceuse contenant 10 à 40% en poids d'alumine et de matière à chaux en proportions telles que le rapport molaire $SiO_2/CaO$ est de 0,7 à 1,2, et par la soumission du mélange à la réaction hydrothermique avec de la vapeur d'eau à une pression de 3,9 à 39,2 bars.

2. Procédé pour la fabrication d'ettringite en ajoutant une solution alcaline à une matière siliceuse et à une matière à gypse, et en faisant réagir le mélange à la température ordinaire ou par hydrothermie, caractérisé par les stades successifs suivants:

Réalisation du procédé selon la revendication 1,
Séparation par filtration de la tobermorite du mélange réactionnel,
Mélange d'une matière à chaux et d'une matière à gypse avec le produit de réaction alcalin résultant dans le filtrat, et
Réaction du mélange à une température allant depuis la température ordinaire jusqu'à 90°C, pour former l'ettringite.

3. Procédé selon la revendication 2, caractérisé par la répétition ultérieure desdits stades successifs avec l'addition de la matière siliceuse renfermant l'alumine et de la matière à chaux présente au filtrat séparé de l'ettringite et provenant dudit quatrième stade mentionné.

4. Procédé pour la fabrication de l'ettringite en ajoutant une solution alcaline à une matière siliceuse et à une matière à gypse et en faisant réagir le mélange à la température ordinaire ou par hydrothermie, caractérisé par les stades suivants:

Réalisation du procédé selon la revendication 1,
Mélange d'une matière à chaux et d'une matière à gypse avec le produit de réaction alcalin résultant dans le mélange réactionnel contenant la tobermorite, et
Réaction du mélange à la température ordinaire jusqu'à une température de 90°C pour former l'ettringite.

5. Procédé revendiqué dans les revendications 1 à 4, caractérisé par le fait que le kaolin, la terre alba, le mica, la cendre volcanique, les scories granulées de haut-fourneau, et les cendres volatiles, ou un mélange d'au moins deux de ces matières, sont utilisés comme matière siliceuse.

6. Procédé tel que défini dans l'une des revendications précédentes, caractérisé par le fait que la solution alcaline utilisée a une concentration de 10 à 200 g d'hydroxyde de sodium dans 1 litre d'eau.

7. Procédé tel que défini dans les revendications 2 à 4, caractérisé par le fait que la chaux vive, la chaux éteinte, du résidu de carbure, ou un mélange d'au moins deux de ces matières, sont utilisés comme matière à chaux.

8. Procédé tel que défini dans les revendications 2 à 4, caractérisé par le fait que le gypse calciné, le gypse semihydraté, le gypse dihydraté, et le gypse obtenu par la désulfuration des gaz d'échappement, ou un mélange d'au moins deux de ces matières, sont utilisés comme matière à gypse.

# FIG.1

| Aluminum silicate material $Al_2O_3 \cdot 2SiO_2 \cdot 2H_2O$ | lime material $Ca(OH)_2$ | Alkali NaOH |

**Autoclave reaction**

(Solid phase) — (liquid phase)

| Tobermorite $5CaO \cdot 6SiO_2 \cdot 5H_2O$ | Sodium Aluminate $NaAlO_2$ |

| lime material $Ca(OH)_2$ | Gypsum material $CaSO_4 \cdot 2H_2O$ |

**Atmospheric Solution reaction Normal temperature ~90℃**

(Solid phase) — (liquid phase)

| Ettringite $3CaO \cdot Al_2O_3 \cdot 3CaSO_4 H_2O$ | Sodium Hydroxide NaOH |

1

FIG.2